# EUROPEAN PATENT APPLICATION

(11) **EP 4 664 659 A1**
(43) Date of publication of application: **17.12.2025**
(21) Application number: 24181374.0
(22) Date of filing: 11.06.2024
(51) Int. Cl.: H01M 50/522, H01M 50/526, H01M 50/581, H01M 50/507, H01M 50/503, H01M 50/505, H01M 50/516

(54) **BATTERY SYSTEM INCLUDING IMPROVED ELECTRICAL CONNECTING ELEMENTS**

(71) Applicant: Samsung SDI Co., Ltd., Yongin-si, Gyeonggi-do 17084 (KR)
(72) Inventor: Blaznik, Matic, 2000 Maribor (SI); Haring, Fritz, 8600 Bruck / Mur (AT)
(74) Representative: Gulde & Partner

(57) **Abstract**

The present disclosure refers to a battery system (100) including a housing (10) and a plurality of battery cells (12) accommodated within the housing (10), each of the battery cells (12) including cell terminals (16), wherein the cell terminals (16) of neighboring battery cells (12) are electrically interconnected via electrical connecting elements (20), each electrical connecting element (20) including a first layer (22) contacting neighboring cell terminals (16) and a second layer (24) disposed on top of the first layer (22), wherein the first layer (22) has a first melting point and the second layer (24) has a second melting point, wherein the second melting point is lower than the first melting point.

## Description

### Field of the Disclosure

The present disclosure relates to a battery system which more securely handles a thermal runaway of one or more of its battery cells. Further, the present invention relates to a vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode or cell terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode or cell terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery cell, state of health (SOH; a variously-defined measurement of the remaining capacity of the battery cell as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by over-current, over-voltage (during charging), over-temperature, under-temperature, over-pressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

The BMS is critical to the safe operation and optimal performance of rechargeable battery cells and helps minimize the possibility of thermal runaway. For example, if the BMS detects that the temperature is too hot, it can regulate the temperature by controlling cooling fans. Alternatively, if the battery cell cannot be cooled and safe conditions restored, the BMS may shut down necessary battery cells to protect the entire system.

An electrical connection between neighboring battery cells of a battery system is generally provided via electrical connecting elements that interconnect cell terminals of the neighboring battery cells. Such cell-to-cell connections, however, provide not only an electrical interconnection between the neighboring battery cells but also a thermal interconnection. In the case of the thermal event, such as a thermal runaway of one of the battery cells, a large amount of heat may be transferred from the affected battery cell via its cell terminals and electrical connecting means to neighboring battery cells which may cause overheating and thus damage to the neighboring battery cells. In the worst-case, the thermal runaway may thereby propagate to one or more of the neighboring battery cells.

It is thus an object of the present invention to overcome or reduce at least some of the drawbacks of the prior art and to provide a battery system which more securely handles a thermal runaway of one or more of its battery cells.

### Summary of Invention

The invention is defined by the appended claims. The description that follows is subjected to this limitation. Any disclosure lying outside the scope of said claims is only intended for illustrative as well as comparative purposes.

According to an aspect of the present disclosure, a battery system is provided including a housing and a plurality of battery cells accommodated within the housing, each of the battery cells including cell terminals, wherein the cell terminals of neighboring battery cells are electrically interconnected via electrical connecting elements, each electrical connecting element including a first layer contacting neighboring cell terminals and a second layer disposed on top of the first layer, wherein the first layer has a first melting point and the second layer has a second melting point, wherein the second melting point is lower than the first melting point.

According to an aspect of the present disclosure, the first layer is a busbar.

According to an aspect of the present disclosure, the first melting point is 600°C or higher.

According to an aspect of the present disclosure, first layer is a metal layer. The first layer, according to an aspect of the present disclosure, includes or consists of aluminum or copper.

According to an aspect of the present disclosure, the second layer is a solder layer.

According to an aspect of the present disclosure, the second melting point is between 90 to 140°C.

According to an aspect of the present disclosure, the second layer includes or consists of a metal alloy.

According to an aspect of the present disclosure, the battery system further includes a cell contacting unit with a carrier which fixates the busbar, wherein the carrier is adapted to collect a molten material of the second layer.

According to an aspect of the present disclosure, a cross-sectional area of the first layer varies no more than 50% over its length between the cell terminals connected by the first layer.

According to an aspect of the present disclosure, a cross-sectional area of the second layer is no more than 60% of a total cross sectional area of the electrical connecting element.

Yet another aspect of the present disclosure refers to an electric vehicle including the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic top view of a battery system according to an embodiment.
- Fig. 2: illustrates a schematic cross section of two neighboring battery cells and their electrical interconnection of the battery system of Fig. 1.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a housing and a plurality of battery cells accommodated inside the housing. The housing may, for example, form a battery housing or battery pack housing. The battery cells may be arranged or stacked along a stacking direction to form one or more cell stacks, each cell stack being placed in a cell stack frame. The housing may be the cell stack frame.

The battery cells are interconnected via electrical connecting elements contacting the respective cell terminals of the battery cells. In other words, each of the battery cells includes two cell terminals, or electrode terminals, wherein an electrical connection between the battery cells is established via the electrical connecting elements. The electrical connecting elements therefore connect a cell terminal of a first battery cell with a cell terminal of a second battery cell. The battery cells may, via the electrical connecting elements, be electrically interconnected in series and/or in parallel. The interconnected battery cells may thus form one or more battery modules/battery packs as mentioned above. The battery cells may, for example, be prismatic or cylindrical cells. Cell spacers may be disposed in between neighboring battery cells. Each of the battery cells may include a venting exit at a venting side of the battery cell, which may be the terminal side of the battery cell including the cell terminals, the venting exits allowing a venting gas stream to escape the battery cells during a thermal runaway. Venting valves may be provided at the venting exits.

The electrical connecting elements each include a first layer and a second layer. Each electrical connecting element may thus form a two- or double-layer structure. In other words, the electrical connecting elements are two- or double-layer electrical connecting elements. The electrical connecting elements may include or consist of these two layers. The first layer contacts the neighboring cell terminals, i.e. cell terminals of neighboring battery cells. The first layer may directly contact the neighboring cell terminals, may e.g. be welded onto the cell terminals. In other words, the first layer is in contact with one of the cell terminals of a first battery cell of the plurality of battery cells and with one of the cell terminals of a second battery cell of the plurality of battery cells. The first layer thus extends from the cell terminal of the first battery cell to the cell terminal of the second battery cell. The first layer provides the electrical interconnection between the neighboring battery cells. The first layer is electrically conductive.

The second layer is disposed on top of the first layer. In other words, the second layer is disposed on a side of the first layer which faces away from the cell terminals. That is, being disposed on top of the first layer means being disposed on the side of the first layer which faces away from the cell terminals. The second layer has a lower melting point than the first layer. That is, the first layer has a first melting point and the second layer has a second melting point, wherein the second melting point is lower than the first melting point.

During regular operation, for example when using the battery system for driving and charging an electric vehicle, the temperature of the first layer stays below the second melting point and thus below the melting point of both the first and second layer. In this operation, the first layer provides the regular electrical connection between the cell terminals as explained above. If one of the battery cells is affected by a thermal runaway, the cell terminals of the affected battery cell heat up rapidly and the first layer of the electrical connecting element conducts the heat towards the neighboring battery cell to which the first layer is connected. During this process, heat is transferred from the first layer to the second layer which absorbs the heat and thereby acts as thermal mass in the initial phase of overheating. This slows down the heat transport to the neighboring battery cell. After reaching the melting point, the second layer melts and thereby reduces the effective cross-section of the electrical connecting element. Consequently, the heat conductivity of the electrical connecting element is reduced (or, in other words, the heat resistance increased), which slows down the heat transport to the neighboring battery cell even further. Also, the phase change of the second layer uses much of the heat energy which also reduces the heat transport to the neighboring battery cell. Thus, thermal propagation to the neighboring cell is prevented or at least reduced such that the neighboring cell will not undergo a thermal runaway.

According to an embodiment, the first layer is a busbar. A busbar is a metallic strip or bar, as often used to interconnect battery cells. The busbar may interconnect two cell terminals of two neighboring battery cells. That is, the busbar may electrically connect one of the cell terminals of a first battery cell of the plurality of battery cells with one of the cell terminals of a second battery cell of the plurality of battery cells. Such a busbar may provide for sufficient electrical connection between neighboring battery cells during regular operation of the battery system

According to an embodiment, the first melting point is 600°C or higher. The first layer may thus maintain the electrical interconnection between the neighboring battery cells even during a thermal runaway. For example, the first melting point may be between 600°C and 900°C, or between 600°C and 800°C, or between 600°C and 700°C. Due to the melting of the second layer, it may be ensured that the first layer does not reach higher temperatures than these.

According to an embodiment, the first layer is a metal layer. The first layer may include or consist of aluminum or copper or another suitable metal or an alloy thereof. Aluminum or copper, or an alloy thereof, may provide for the first layer to have a suitable first melting point, for example in the above-mentioned temperature ranges. This may ensure that the first layer maintains the electrical interconnection between the neighboring battery cells even during a thermal runaway.

According to an embodiment, the second layer is a solder layer. In other words, the second layer may include or consist of a solder. The solder layer may melt during a thermal runaway and may thus absorb heat and reduce the heat conductivity of the electrical connecting element as explained above.

The second melting point may be chosen such that the second layer melts before the first layer reaches a temperature which would lead to a critical heat up of the neighboring battery cell. According to an embodiment, the second melting point is between 90 to 140°C. The second melting point may be between 100-130°C, or 110-120°C. These temperature ranges may ensure that the second layer melts timely before the first layer reaches a temperature which would lead to a critical heat up of the neighboring battery cell. Thus, thermal propagation to the neighboring battery cell may be effectively prevented or at least reduced.

According to an embodiment, the second layer includes or consists of a metal alloy. In an embodiment, the metal alloy may be a tin-lead alloy, for example a bismuth-tin-lead alloy. The second melting point can be adjusted/set by the ratio of the constituting elements. For example, Sn₁₆Pb₃₂Bi₅₂ may provide a melting point within the range. Thus, such a metal alloy may provide for the second layer to melt before the first layer reaches a temperature which would lead to a critical heat up of the neighboring battery cell. Thus, the thermal propagation to the neighboring cell may be prevented or at least reduced as explained above.

According to an embodiment, the battery system further includes a cell contacting unit with a carrier which fixates the busbar, wherein the carrier is adapted to collect a molten material of the second layer. The cell contacting unit may be fixed to the terminal side of the battery cells. The cell contacting unit may include collecting elements, for example a catch or collecting trough, that are arranged such that the molten material of the second layer is (gravitationally) caught inside the collecting elements. This may prevent the molten material of the second layer dripping onto the battery cells or flowing in-between the battery cells.

According to an embodiment, a cross-sectional area of the first layer varies no more than 50% over its length between the two cell terminals connected by the first layer. In other words, a smallest cross-sectional area of the first layer is at least 50% that of a largest cross-sectional area of the first layer over its length between the two cell terminals. The cross-sectional area of the first layer may vary no more than 40%, or 30%, or 20%, or 10% over its length between the two cell terminals connected by the first layer. For example, the cross-sectional area of the first layer may be substantially constant over the length of the first layer. This may ensure that the first layer maintains the electrical interconnection between the neighboring battery cells even during a thermal runaway.

According to an embodiment, a cross-sectional area of the second layer does not exceed 60% of a total cross sectional area of the electrical connecting element at any section over the length of the electrical connecting element between the two cell terminals connected by the electrical connecting element. For example, the cross-sectional area of the second layer does not exceed 50%, or 40%, or 30% of a total cross sectional area of the electrical connecting element. In other words, the cross-section of the second layer is at most 60% that of the entire electrical connecting element. The first layer may thus form at least 40% of the total cross sectional area of the electrical connecting element. This may ensure that the first layer provides and maintains a sufficient electrical interconnection between the neighboring battery cells even when the second layer melts during a thermal runaway.

The disclosure also pertains to an electric vehicle including a battery system according to the disclosure.

### Specific Embodiments

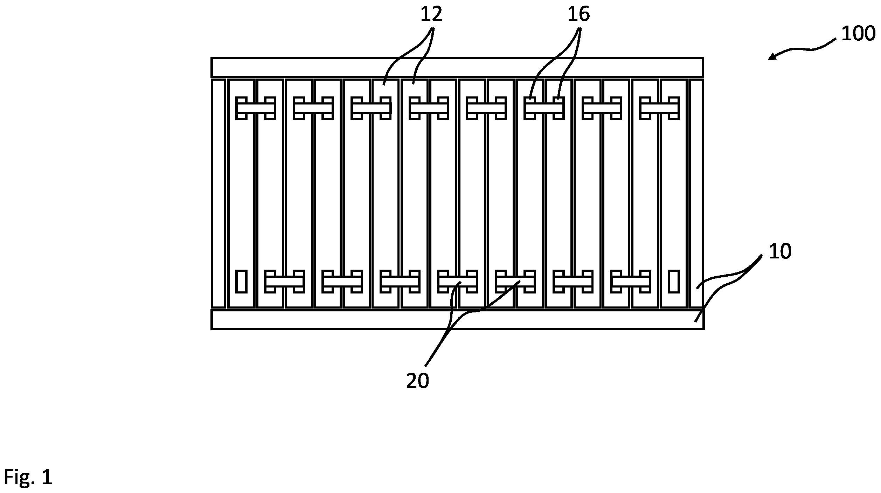

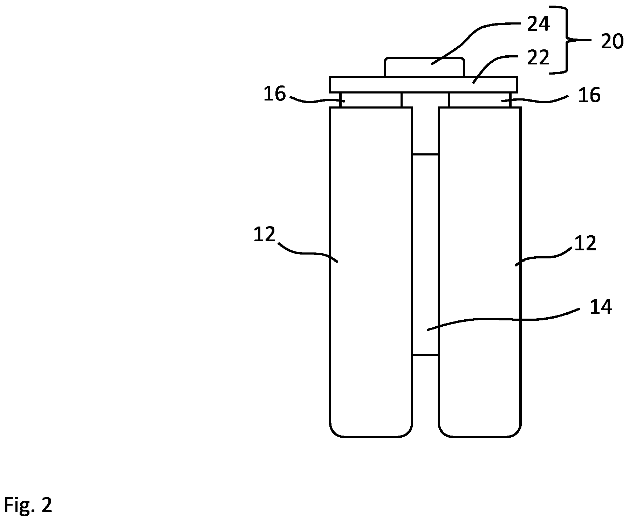

Fig. 1 illustrates, in a top view, a battery system 100 according to an embodiment of the disclosure. The battery system 100 includes a housing 10 and a plurality of battery cells 12 accommodated within the housing 10. Each of the battery cells 12 includes cell terminals 16 which are electrically interconnected in series via electrical connecting elements 20. Cell spacers 14 may be arranged between neighboring battery cells 12 as shown in Fig. 2.

Fig. 2 shows two neighboring battery cells 12 of the battery system 100 and their electrical connecting element 20 in a sectional view. As can be seen in this detailed view, the electrical connecting element 20 is of a two-layer structure consisting of a first layer 22 and a second layer 24 disposed on top of the first layer 22. The first layer 22, which may be a busbar, contacts the cell terminals 16 of the neighboring battery cells 12 and thereby provides an electrical connection between these neighboring battery cells 12. The second layer 24 may be placed such that it does not or only partly overlap with the cell terminals 16, when viewing along a vertical direction, in order to ensure that the first layer 22 can be welded to the cell terminals 16.

The first layer 22 has a first melting point and the second layer 24 has a second melting point, wherein the second melting point is lower than the first melting point. For example, the first melting point may be 600°C or higher and the second melting point may be between 90 to 140°C. This may be achieved by the first layer 22 being a metal layer including aluminum or copper and the second layer 24 being a solder layer including a metal alloy, for example tin-lead.

During regular operating temperatures, the first layer 22 provides for the electrical interconnection between the battery cells 12 so that the battery system may function as a traction battery for an electric vehicle. Should a thermal runaway occur in one of the battery cells 12, the cell terminals 16 of this battery cell quickly heat up to very high temperatures. Conventional busbars may form heat bridges which transfer this heat to the neighboring battery cells which may thus be damaged or the thermal runaway event may even propagate to these cells. With the two-layer electrical connecting element 20 according to the disclosure, however, this problem is alleviated: At a first stage, the second layer 24 may serve as a heat sink for the affected battery cell 12 absorbing some of the heat. At a second stage, the second layer 24 will exceed its melting point and will thus melt. This phase change leads to further heat absorption and, when the second layer 24 is molten, reduces the effective cross-section of the electrical connecting element 20 and thus the heat conductivity of the electrical connecting element 20 to such a degree that any remaining heat that is transferred to the neighboring battery cell 12 is low enough not to cause damage to that battery cell 12.

Thus, thermal propagation is at least reduced so that the battery system 100 may more securely handle a thermal runaway of one or more of its battery cells 12.

### Reference signs

- 10: housing
- 12: battery cells
- 14: cell spacer(s)
- 16: cell terminals
- 20: electrical connecting elements
- 22: first layer
- 24: second layer

## Claims

1. A battery system (100) comprising a housing (10) and a plurality of battery cells (12) accommodated within the housing (10), each of the battery cells (12) comprising cell terminals (16), wherein the cell terminals (16) of neighboring battery cells (12) are electrically interconnected via electrical connecting elements (20), each electrical connecting element (20) comprising a first layer (22) contacting neighboring cell terminals (16) and a second layer (24) disposed on top of the first layer (22), wherein the first layer (22) has a first melting point and the second layer (24) has a second melting point, wherein the second melting point is lower than the first melting point.

2. The battery system according to claim 1, wherein the first layer (22) is a busbar.

3. The battery system according to any one of the preceding claims, wherein the first melting point is 600°C or higher.

4. The battery system according to any one of the preceding claims, wherein first layer (22) is a metal layer comprising or consisting of aluminum or copper.

5. The battery system according to any one of the preceding claims, wherein the second layer (24) is a solder layer.

6. The battery system according to any one of the preceding claims, wherein the second melting point is between 90 to 140°C.

7. The battery system according to any one of the preceding claims, wherein the second layer (24) comprises or consists of a metal alloy.

8. The battery system according to any one of the preceding claims, further comprising a cell contacting unit with a carrier which fixates the busbar, wherein the carrier is adapted to collect a molten material of the second layer.

9. The battery system according to any one of the preceding claims, wherein a cross-sectional area of the first layer (22) varies no more than 50% over its length between the cell terminals (16) connected by the first layer (22).

10. The battery system according to any one of the preceding claims, wherein a cross-sectional area of the second layer (24) is no more than 60% of a total cross sectional area of the electrical connecting element (20).

11. An electric vehicle comprising the battery system (100) according to any one of the preceding claims.

## Amended claims

### Amended claims in accordance with Rule 137(2) EPC.

1. A battery system (100) comprising a housing (10) and a plurality of battery cells (12) accommodated within the housing (10), each of the battery cells (12) comprising cell terminals (16), wherein the cell terminals (16) of neighboring battery cells (12) are electrically interconnected via electrical connecting elements (20), each electrical connecting element (20) comprising a first layer (22) contacting neighboring cell terminals (16) and a second layer (24) disposed on top of the first layer (22), wherein the first layer (22) has a first melting point and the second layer (24) has a second melting point, wherein the second melting point is lower than the first melting point, **characterized in that** the battery system (100) comprises a cell contacting unit with a carrier which fixates the busbar, wherein the carrier is adapted to collect a molten material of the second layer.

2. The battery system according to claim 1, wherein the first layer (22) is a busbar.

3. The battery system according to any one of the preceding claims, wherein the first melting point is 600°C or higher.

4. The battery system according to any one of the preceding claims, wherein first layer (22) is a metal layer comprising or consisting of aluminum or copper.

5. The battery system according to any one of the preceding claims, wherein the second layer (24) is a solder layer.

6. The battery system according to any one of the preceding claims, wherein the second melting point is between 90 to 140°C.

7. The battery system according to any one of the preceding claims, wherein the second layer (24) comprises or consists of a metal alloy.

8. The battery system according to any one of the preceding claims, wherein a cross-sectional area of the first layer (22) varies no more than 50% over its length between the cell terminals (16) connected by the first layer (22).

9. The battery system according to any one of the preceding claims, wherein a cross-sectional area of the second layer (24) is no more than 60% of a total cross sectional area of the electrical connecting element (20).

10. An electric vehicle comprising the battery system (100) according to any one of the preceding claims.
